# FASCICULE DE BREVET EUROPEEN

(11) **EP 4 223 568 B1**
(45) Date de publication et mention de la délivrance du brevet: **19.08.2026**
(21) Numéro de dépôt: 22155083.3
(22) Date de dépôt: 03.02.2022
(51) Int. Cl.: B60J 1/16

(54) **DISPOSITIF D'OBTURATION D'UNE BAIE MÉNAGÉE DANS LA CARROSSERIE D'UN VÉHICULE, ET VÉHICULE CORRESPONDANT**
VORRICHTUNG ZUR ABDICHTUNG EINES IN DIE KAROSSERIE EINES FAHRZEUGS EINGELASSENEN ÖFFNUNGSFELDS UND ENTSPRECHENDES FAHRZEUG
DEVICE FOR SEALING AN OPENING MADE IN THE BODY OF A VEHICLE, AND CORRESPONDING VEHICLE

(43) Date de publication de la demande: 09.08.2023
(73) Titulaire: Advanced Comfort Systems France SAS - ACS France, 79302 Bressuire (FR)
(72) Inventeur: GIRET, Frédéric, 79300 Boisme (FR); JEAN, Anthony, 44115 Haute-Goulaine (FR); NEE, Maxime, 79300 Bressuire (FR)
(74) Mandataire: Vidon Brevets & Stratégie

(56) Documents cités:
- FR-A1- 2 910 519
- FR-A1- 2 961 548
- GB-A- 696 860
- US-A- 5 799 449
- US-A1- 2005 044 799

## Description

### Domaine de l'invention

Le domaine de l'invention est celui de l'équipement des baies, utilisées notamment dans les véhicules automobiles.

Plus précisément, l'invention concerne les dispositifs d'obturation d'une baie ménagée dans un élément de structure, par exemple dans la carrosserie d'un véhicule, ou dans une portière du véhicule, et comprenant une partie mobile coulissante susceptible de libérer ou de fermer une ouverture en offrant un aspect affleurant, vu de l'extérieur.

L'invention peut notamment équiper différents types de structures, tels que les caravanes, les camping-cars, les cars et bus, les minibus, les camions, les camionnettes, les bateaux, etc.

De tels dispositifs, développés depuis plusieurs années par le titulaire de la présente demande, sont notamment connus sous le terme "baie flush".

En d'autres termes, ces dispositifs sont conçus de façon à présenter, vu de l'extérieur, un aspect affleurant ou quasi-affleurant entre la carrosserie, ou plus généralement la paroi ou la structure, et le panneau fixe du dispositif.

### Art antérieur

Le principe général de cette technique est notamment décrit dans les documents de brevet EP-0 778 168 et EP-0 857 844, ou encore FR 2 910 519.

Le dispositif d'obturation (appelé par la suite "baie flush") comprend une partie fixe et une partie mobile par rapport à cette partie fixe, ou panneau coulissant.

La partie mobile est reliée à l'ensemble fixe par des éléments fonctionnels qui assurent la mobilité requise et qui sont rapportés sur la face de la partie fixe tournée vers l'intérieur du véhicule.

Ces éléments fonctionnels, ou rails, assurent une fonction de guidage et de maintien du panneau mobile. Ils sont placés sur la face orientée vers l'intérieur du véhicule, de façon suffisamment éloignée des bords, ou de la périphérie, de la partie fixe pour que cette périphérie puisse être solidarisée directement aux bords de la baie, sans que les rails n'interfèrent. On peut ainsi s'affranchir de la présence d'un cadre de liaison entre les bords de la baie et la partie fixe.

Cette partie fixe peut être réalisée en un ou plusieurs éléments (placés les uns à côté des autres dans un même plan), par exemple en verre ou en polycarbonate.

Une telle baie flush peut ainsi être montée intégralement indépendamment du véhicule, et rapportée, depuis l'extérieur, dans le logement défini à cet effet par la baie, ou le logement, définie dans la carrosserie, ou plus généralement dans la paroi.

Les bords de la partie fixe sont solidarisés, par exemple à l'aide d'un cordon de colle, aux bords de la baie, sans autre élément intermédiaire de liaison.

Sur le plan esthétique, la baie flush présente, vue de l'extérieur, un aspect lisse, affleurant, du fait qu'aucun cadre n'est nécessaire sur le contour de l'ouverture formée dans l'ensemble fixe.

Pour assurer le déplacement de la partie mobile, constituée généralement par un panneau transparent, on prévoit donc un dispositif de guidage comportant un premier et un second rails de guidage montés fixes sur la partie fixe (ou structure fixe) de la baie, de part et d'autre de l'ouverture fermée par le panneau mobile.

Le panneau mobile est monté sur les rails, pour coulisser par exemple selon une direction longitudinale, dans un plan de coulissement entre une (ou plusieurs) position d'ouverture et une position de fermeture, dans laquelle il obture l'ouverture.

Pour maximiser l'aspect affleurant, il a été proposé que, dans la position de fermeture, le panneau mobile s'inscrive dans le plan de la partie fixe, en passant d'une position intermédiaire de dégagement, dans le plan de coulissement, en regard de l'ouverture et dégagé de celle-ci à la position de fermeture.

On notera que le terme « plan » doit ici s'entendre dans une acception élargie : le plan formé par la baie est parfois courbe, selon une, voire deux, directions pour s'adapter à la forme de la structure (ceci justifie également, dans certains cas, le terme « sensiblement » utilisé dans la description et les revendications).

Le panneau mobile peut être déplacé manuellement ou bien à l'aide d'un moteur électrique. Dans ce dernier cas, des moyens d'actionnement agissent sur le panneau mobile afin de déplacer ce dernier entre une position fermée et au moins une position ouverte. Les moyens d'actionnement peuvent notamment se présenter sous la forme d'un câble (dit câble Push-Pull) relié au moteur électrique de sorte à tirer ou pousser le panneau mobile. Les moyens d'actionnement peuvent également se présenter sous la forme d'une crémaillère ou de câbles du type câble de vélo.

Pour favoriser l'ouverture et la fermeture du panneau mobile, une technique connue consiste à mettre en œuvre, dans chacun des rails de guidage, une navette guidée en translation dans le rail, comme décrit par exemple dans le document de brevet WO2010/146185. Chaque navette permet de contrôler le déplacement du panneau mobile, d'une part pour le dégager ou l'inscrire dans l'ouverture ménagée dans le panneau fixe (axe Y) et d'autre part pour le guider en coulissement (axe X). Une telle navette peut comprendre deux pistes de guidage aptes à coopérer respectivement avec deux pions fixes portés par le panneau mobile, ou inversement.

La coopération des pistes de guidage avec les pions fixe permet d'obtenir un décalage, classiquement un louvoiement, du panneau mobile de sorte à déplacer les bords latéraux du panneau mobile par rapport à la partie fixe.

Comme mentionné ci-dessus, la baie est assemblée avant d'être fixée au niveau de l'ouverture ménagée dans la structure. Généralement, la fixation de la baie dans la structure se fait par collage.

Un inconvénient de cette technique réside dans le fait que son démontage est en conséquence relativement complexe. En effet, pour démonter la baie de la structure, par exemple pour intervenir sur une navette ou remplacer le panneau mobile, il est nécessaire de couper/sectionner/retirer/gratter complètement la colle maintenant en position la baie contre la structure. Il est également nécessaire de retirer l'ensemble de la garniture pour permettre le retrait de la baie complète. Une fois l'intervention effectuée, il est nécessaire de remettre en place l'ensemble du dispositif, avec nouveau joint de colle.

Ces opérations sont complexes, chronophages et peuvent ensuite engendrer des défauts, notamment esthétiques, sur la structure de réception et/ou sur la baie.

En conséquence, les opérations de maintenance de la baie sont rendues très difficiles puisqu'un retrait complet de la baie est nécessaire quel que soit le problème technique rencontré (par exemple dans le cas d'un bris de verre du panneau mobile, d'un problème sur un ressort de rappel ou sur un câble d'entrainement ou de synchronisation, etc.).

Il existe donc un besoin de fournir un dispositif d'obturation d'une baie permettant de faciliter et optimiser les opérations de maintenance de la baie après fixation sur la structure.

La solution technique ne doit toutefois pas induire d'effets néfastes et indésirables qui pourraient dégrader l'efficacité et la fiabilité des baies actuelles.

### Résumé de l'invention

La technique de l'invention permet de résoudre au moins certains des inconvénients soulevés par l'art antérieur. Plus précisément, l'invention se rapporte à un dispositif d'obturation d'une baie ménagée dans une structure, comprenant une partie fixe, dans laquelle est définie une ouverture, et au moins un panneau mobile coulissant guidé le long de deux rails de guidage montés sur une face dudit panneau fixe, entre une position de fermeture, obturant ladite ouverture, dans un premier plan défini par ledit panneau fixe, dit plan d'obturation, et au moins une position d'ouverture, dans un second plan, dit plan de coulissement, sensiblement parallèle audit plan d'obturation. Chacun desdits rails de guidage porte au moins une navette guidée en translation dans ledit rail, mobile en translation dans lesdits rails de guidage, et assure le passage du panneau mobile de ladite position d'obturation à ladite au moins une position de coulissement, et réciproquement, et le déplacement en coulissement dudit panneau mobile dans ledit plan d'obturation.

Selon l'invention, au moins un desdits rails de guidage porte un élément de guidage amovible de longueur au moins égale à la longueur de ladite navette, permettant, lorsqu'il est retiré, de dégager ladite navette dudit rail de guidage.

De cette manière, une partie d'un des rails de guidage peut être déplacée et/ou retirée de sorte à permettre un déplacement en translation selon l'axe Y (perpendiculaire à l'axe X de coulissement) de la navette. Un tel degré de liberté permet de dégager/retirer la navette correspondante hors du rail de guidage sans intervention sur la partie fixe. Ainsi, il est possible de démonter complètement le sous-ensemble mobile, comprenant le panneau mobile et une navette de guidage, par rapport au sous-ensemble fixe, comprenant la partie fixe et les rails de guidage, qui reste solidarisé à la structure.

L'invention permet ainsi de faciliter les opérations de maintenance du dispositif d'obturation sans nécessiter de démonter complètement le dispositif d'obturation hors de la structure dans laquelle il est monté. En d'autres termes, il est possible de laisser le sous-ensemble fixe solidaire de la structure lors des opérations de maintenance ne nécessitant pas son démontage, ce qui n'est pas le cas dans les techniques de l'art antérieur.

Selon l'invention, ledit élément de guidage amovible est mobile dans une direction parallèle audit rail de guidage, entre une position de solidarisation au rail et une position de libération.

Selon l'invention, dans ladite position de libération, ledit élément de guidage amovible est mobile dans au moins une direction perpendiculaire audit rail de guidage, de façon à être séparé de celui-ci.

Ainsi, pour retirer/séparer l'élément de guidage amovible du rail de guidage, il est nécessaire de tout d'abord lui appliquer un déplacement dans une direction parallèle au rail de guidage (selon l'axe X) puis dans une direction perpendiculaire au rail de guidage (selon l'axe Y). D'autres cinématiques de montage / démontage, en X puis Z par exemple, sont bien sûr envisageables. Ces deux mouvements successifs permettent de dégager l'élément de guidage amovible. Ce double mouvement permet en outre d'éviter tout retrait non souhaité ou accidentel de l'élément de guidage amovible.

Selon un mode de réalisation particulier de l'invention, ledit rail de guidage, respectivement ledit élément de guidage amovible, porte au moins un crochet apte à se solidariser à un logement correspondant formé dans ledit élément de guidage amovible, respectivement ledit rail, dans ladite position de solidarisation.

De tels moyens de solidarisation de l'élément de guidage amovible sur le rail de guidage sont très simples à mettre en œuvre, peu coûteux et fiables. Ces moyens de solidarisation fournissent une solution technique simple pour obtenir le double mouvement de dégagement selon l'axe X puis l'axe Y. D'autres solutions de maintien, par exemple une vis ou tout autre élément de liaison adapté, peuvent être mises en œuvre.

Selon un autre aspect particulier de l'invention, le dispositif d'obturation comprend au moins deux crochets similaires, distribués selon un axe parallèle à l'axe dudit rail de guidage.

Ainsi, le guidage et le maintien de l'élément de guidage amovible par rapport au rail de guidage est optimisé.

Selon un encore autre aspect particulier de l'invention, ledit rail de guidage présente une rainure de guidage dudit élément de guidage amovible le long dudit rail.

Une telle rainure permet d'assurer un guidage optimal de l'élément de guidage amovible selon l'axe X lors de son passage de la position de solidarisation à la position de libération, et réciproquement.

Selon un autre aspect particulier de l'invention, ledit élément de guidage amovible présente une seconde portion de maintien et/ou de guidage de ladite navette, prolongeant une première portion de maintien et/ou de guidage formée dans ledit rail de guidage.

L'élément de guidage amovible présente donc une forme correspondante au rail de guidage pour assurer un guidage optimal de la navette supérieure (c'est-à-dire sans frottement additionnel, sans à-coup, etc.).

Selon encore un autre aspect particulier de l'invention, ledit élément de guidage amovible porte une portion d'extrémité destinée à être en butée avec un élément de garniture d'un véhicule.

Cette portion d'extrémité permet notamment de former un « mur » contre le passage de la lumière.

L'invention concerne également un véhicule automobile comprenant au moins un dispositif d'obturation tel que décrit précédemment.

### Liste des Figures

L'invention, ainsi que les différents avantages qu'elle présente, seront plus facilement compris, à la lumière de la description qui va suivre d'un mode de réalisation illustratif et non limitatif de celle-ci, et des dessins annexés parmi lesquels :
[Fig 1] illustre un exemple d'un dispositif d'obturation, ou baie flush ;
[Fig 2] illustre le sous-ensemble mobile du dispositif d'obturation de la figure 1 ;
[Fig 3] illustre une vue d'ensemble, en perspective d'un dispositif d'obturation selon l'invention ;
[Fig 4] illustre une vue partiellement éclatée du dispositif d'obturation de la figure 3 ;
[Fig 5] illustre une vue de détails montrant l'élément de guidage amovible monté sur le rail de guidage du dispositif d'obturation de la figure 3 ;
[Fig 6] illustre une vue de détails montrant le rail de guidage après retrait de l'élément de guidage amovible de la figure 5.

### Description détaillée de l'invention

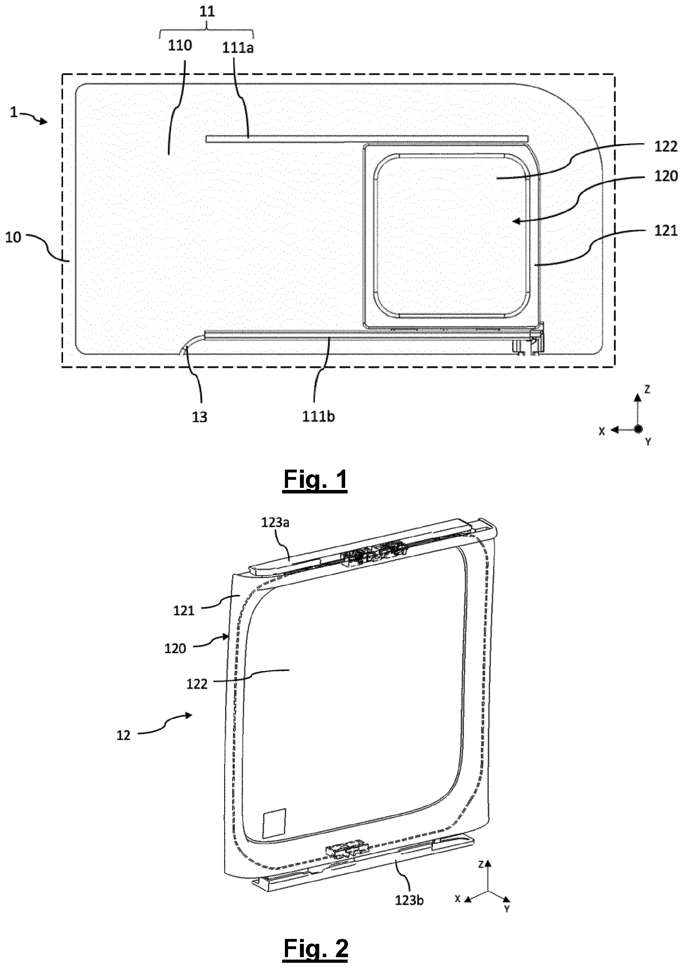

On illustre par la suite un mode de réalisation de l'invention, traité à titre de simple exemple illustratif, et non limitatif, à l'appui des figures 1 à 6.

### Fonctionnement général de la baie

La **figure 1** illustre une baie flush à panneau mobile en coulissement vue de l'intérieur du véhicule.

Une telle baie flush 1 se présente sous la forme d'un ensemble, ou dispositif d'obturation, prêt à être placé dans une baie (c'est-à-dire une ouverture, ou un "trou") ménagée dans la carrosserie 10 (paroi latérale par exemple) ou une porte, ou plus généralement dans la structure d'un véhicule (ou d'une caravane ou d'un camping-car, par exemple), ou plus généralement d'une paroi devant recevoir un dispositif d'obturation muni d'un ouvrant. Pour simplifier la compréhension de l'invention, la carrosserie 10, également appelée structure, bien connue de l'état de la technique, est représentée de manière schématique en traits discontinus.

Un tel dispositif d'obturation comprend une partie fixe 110, c'est-à-dire restant immobile par rapport à la structure 10 qui la reçoit, et un panneau mobile en coulissement, ou panneau coulissant, 120, mobile par rapport à la partie fixe 110.

La partie fixe 110, encore appelée panneau fixe, peut notamment être réalisée en verre ou en polycarbonate, en un ou plusieurs éléments.

La partie fixe 110 est percée d'une ouverture obturée par le panneau mobile 120 dans la position de la figure 1 et s'étendant dans un même plan que la partie fixe 110.

Ce panneau mobile 120 comporte notamment une portion vitrée 122 et un cadre 121, comme illustré sur la **figure 2****.**

Des rails de guidage, respectivement un rail supérieur 111a et un rail inférieur 111b, sont rapportés, par exemple par collage, sur la face de la partie fixe 110 orientée vers l'intérieur du véhicule.

La partie fixe 110 et les rails 111a, 111b forment un sous-ensemble fixe 11 du dispositif d'obturation 1.

On note que ces rails sont éloignés du contour de la partie fixe 110, et ne participent pas, ni ne nuisent, à la solidarisation de celle-ci au bord de la baie.

Les rails 111a et 111b, qui sont sensiblement parallèles dans cet exemple, maintiennent et guident en coulissement le panneau mobile 120, qui présente un cadre 121 solidaire des rails 111a, 111b.

Le panneau mobile 120 peut être déplacé le long des rails 111a, 111b, dans un plan de coulissement sensiblement parallèle au plan défini par la partie fixe 110.

Le panneau mobile 120 peut venir obturer complètement l'ouverture de la partie fixe 110 (figure 1) ou libérer partiellement ou totalement cette ouverture (non représenté).

Ainsi, le panneau mobile 120 peut prendre une ou plusieurs positions d'ouverture, selon sa position par rapport aux rails 111a, 111b.

Par ailleurs, le panneau mobile 120 peut se déplacer perpendiculairement au plan défini par la partie fixe 110, de façon à venir obturer l'ouverture, dans une position fermée (figure 1), dans laquelle elle affleure avec cette partie fixe 110, de façon à proposer un ensemble affleurant (carrosserie 10, partie fixe 11 et partie mobile 12).

La face de la partie fixe 110 tournée vers l'intérieur du véhicule porte par ailleurs un joint d'étanchéité (non représenté) collé sur le contour de l'ouverture, dont l'extrémité de la lèvre vient prendre appui sur le panneau mobile 120, lorsque celui-ci est en position d'obturation. Dans une variante, le joint d'étanchéité peut être monté sur le cadre 121 du panneau mobile 12, pour venir en contact avec la partie fixe 110.

Le rail supérieur 111a porte une navette supérieure 123a et le rail inférieur 111b porte une navette inférieure 123b, chacune des navettes portant deux gorges (non illustrées), ou pistes, situées au voisinage respectivement de chaque bord latéral du panneau mobile 120 et coopérant avec un pion avant et arrière (non illustrés) solidaire d'un bord du panneau mobile 120.

Chaque navette 123a, 123b est ainsi guidée en coulissement dans un rail 111a, 111b, selon un axe parallèle à l'axe X, c'est-à-dire l'axe correspondant à la longueur du véhicule.

Les rails sont donc aptes à recevoir les navettes de sorte que ces dernières puissent coulisser longitudinalement dans les rails selon l'axe X. Ainsi, les rails sont simples et peu coûteux à fabriquer, puisqu'ils assurent un guidage selon un seul axe, les navettes se chargeant du déplacement selon l'axe Y.

Les pistes ménagées dans les navettes 123a, 123b permettent, lors du déplacement des navettes, d'entrainer le panneau mobile et de permettre son déplacement, selon les axes X et Y, entre la position fermée et la ou les positions d'ouverture.

Le panneau mobile 120 et les navettes 123a, 123b forment un sous-ensemble mobile 12 du dispositif d'obturation 1.

Les différents mouvements du panneau mobile 120 sont contrôlés à partir de moyens de mise en mouvement des navettes 2, 3 à l'intérieur des rails de guidage 111a, 111b.

Le mouvement de la navette inférieure 123b le long du rail de guidage inférieure 111b est assuré par le biais d'un câble de commande, ou câble d'entrainement, 13 de type "push pull", lui-même entrainé par des moyens motorisés commandés par un utilisateur.

Plus précisément, le câble d'entrainement 13 est destiné soit à pousser sur la navette inférieure 123b (dans la direction de l'axe X, c'est-à-dire vers l'arrière du véhicule) pour déplacer le panneau mobile 120 de sa position fermée vers l'une des positions ouvertes, soit pour tirer la navette inférieure 123b (dans une direction inverse à l'axe X, c'est-à-dire vers l'avant du véhicule) pour déplacer le panneau mobile 120 d'une position ouverte vers sa position fermée.

Le câble d'entrainement 13 est, dans cet exemple, poussé ou tiré par un moteur (non illustré).

### Description d'un exemple d'élément de guidage amovible selon l'invention

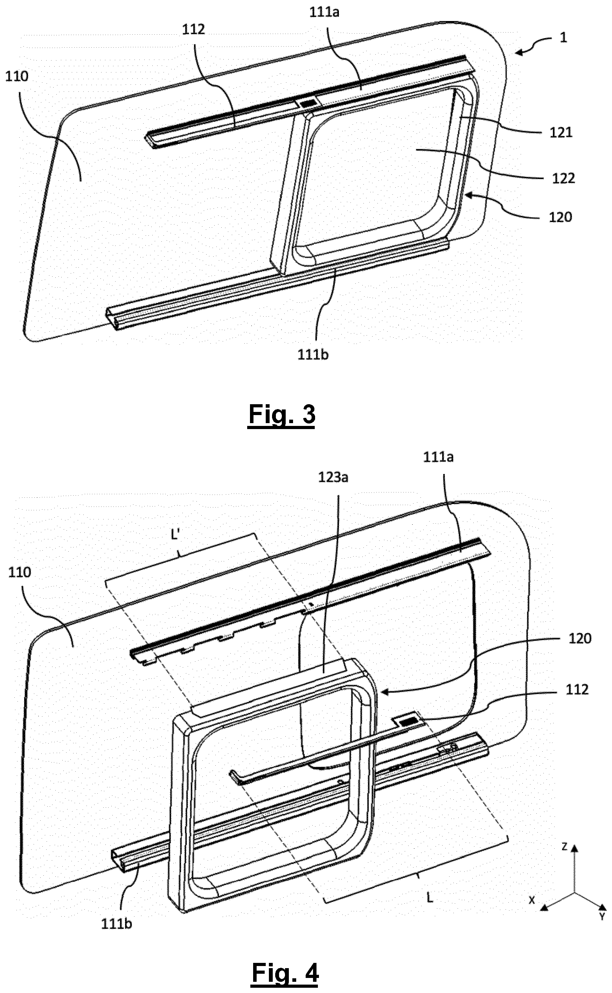

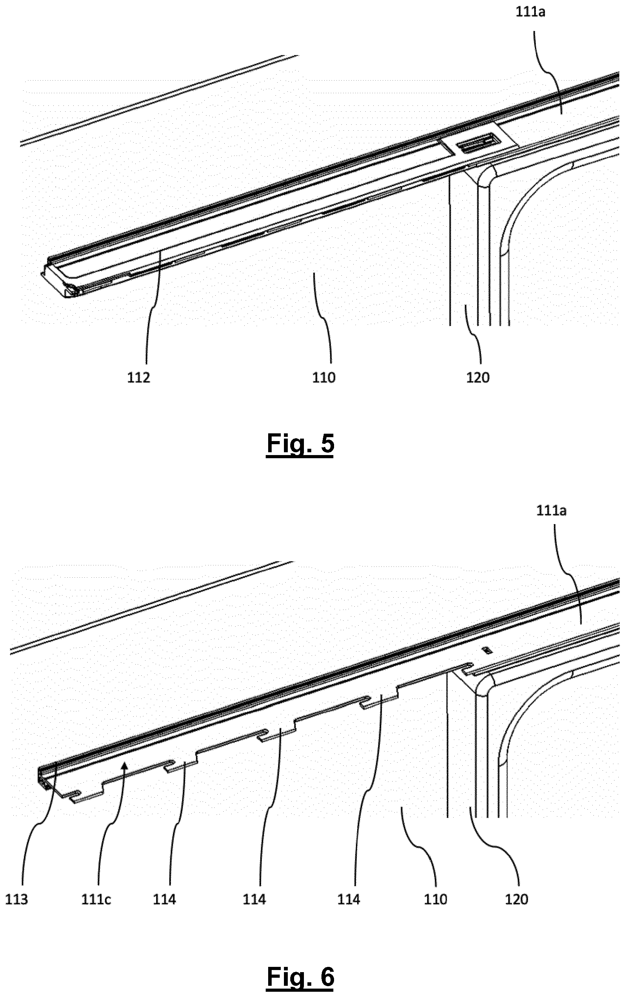

Les figures 3 et 6 illustrent un dispositif d'obturation selon l'invention dans lequel au moins des rails de guidage est muni d'un élément de guidage amovible.

La **figure 3** illustre le dispositif d'obturation 1 de l'invention dans une position d'utilisation classique, correspondant à une position/un état complètement monté du dispositif d'obturation 1 dans l'ouverture ménagé dans la carrosserie 10.

La **figure 4** illustre le dispositif d'obturation 1 l'invention dans une position/un état démontée, dans laquelle un élément de guidage amovible 112 est démonté/retiré de sorte à libérer le sous-ensemble mobile 12.

Dans cet exemple, le rail supérieur 111a porte l'élément de guidage amovible 112. Cet élément de guidage amovible 112 constitue une partie du rail 111a et est apte, lorsqu'il est monté/fixé sur le rail 111a, à guider la navette supérieure 123a.

L'élément de guidage amovible 112 est donc apte, d'une part, à guider la navette supérieure 123a lorsqu'il est monté sur le rail supérieur 111a (position de solidarisation) et, d'autre part, à libérer un espace suffisant pour permettre le retrait de la navette supérieure 123a hors du rail de guidage supérieur 111a lorsqu'il est démonté du rail de guidage supérieur 111a.

L'élément de guidage amovible 112 présente donc une forme correspondante au profil du rail supérieur 111a pour permettre le guidage de la navette 123a. Il présente en outre une longueur L au moins égale à la longueur L' de la navette supérieure 123a de sorte à ce que la navette 123a puisse être dégagée/retirée du rail supérieur 111a, par un déplacement selon l'axe Y lorsque l'élément de guidage amovible 112 est retiré.

En effet, le retrait/démontage de l'élément de guidage amovible 112 permet de déplacer la navette supérieure 123a selon l'axe Y de sorte à sortir/dégager la navette supérieure 123a du rail de guidage 111a. Le retrait de l'élément de guidage amovible 112 permet donc de libérer un degré de liberté (en translation) selon l'axe Y pour la navette supérieure 123a.

La **figure 5** illustre en détails l'élément de guidage amovible 112 lorsqu'il est monté sur le rail de guidage supérieur 111a, correspondant à la position de solidarisation de l'élément de guidage amovible 112.

La **figure 6** illustre en détails la portion de réception 111c du rail de guidage supérieur 111a apte à recevoir l'élément de guidage amovible 112. Sur cette figure, l'élément de guidage amovible 112 est séparé/retiré du rail de guidage supérieur 111a et n'est donc pas illustré.

Dans la position de solidarisation illustrée sur la figure 5, l'élément de guidage amovible 112 et la portion de réception 111c forment ensemble un prolongement du rail de guidage supérieur 111a de sorte à assurer un guidage optimal de la navette supérieure 123a.

L'élément de guidage amovible 112 présente donc une forme correspondante au rail de guidage supérieur 111a pour assurer un guidage optimal de la navette supérieure 123a. Pour ce faire, l'élément de guidage amovible 112 présente une seconde portion de maintien et/ou de guidage de la navette supérieure 123a prolongeant une première portion de maintien et/ou de guidage formé dans le rail de guidage supérieur 111a.

Comme illustré sur la figure 6, la portion de réception 111c du rail de guidage 111a présente, dans cet exemple, trois crochets 114 de solidarisation. La portion de réception 111c doit présenter au moins un crochet. La mise en œuvre de trois crochets 114 permet une solidarisation efficace et fiable de l'élément de guidage amovible 112.

Les crochets 114 sont tous similaires et sont distribués sensiblement régulièrement sur le bord de la portion de réception 111c selon un axe parallèle à l'axe du rail de guidage supérieur 111a (selon l'axe X).

Les crochets 114 présentent une première section s'étendant du bord de la portion de réception 111c vers l'intérieur du véhicule et une seconde section, prolongeant la première section, s'étendant vers l'arrière du véhicule, soit selon un axe parallèle au rail de guidage supérieur 111a (selon l'axe X).

Chaque crochet 114 est destiné à coopérer/à se solidariser à un logement (non illustré) respectif porté par l'élément de guidage amovible 112.

On comprend bien évidemment que les crochets pourraient être portés par l'élément de guidage amovible et que les logements soient ménagés sur le rail de guidage, sans pour autant s'écarter du principe général de l'invention.

Ainsi, pour retirer l'élément de guidage amovible 112, il est nécessaire de déplacer ce dernier dans une direction parallèle au rail de guidage supérieur 111a (ici vers l'arrière du véhicule ou selon l'axe X). Ce premier déplacement permet de déplacer l'élément de guidage amovible 112 entre une position de solidarisation (illustrée sur la figure 5) et une position de libération (non illustrée).

La seconde section des crochets présente de préférence une longueur relativement faible de sorte que le mouvement selon la direction parallèle au rail de guidage (selon l'axe X) pour le passage de la position de solidarisation à la position de libération soit court afin de tenir compte de l'espace limité séparant l'extrémité du rail de guidage et les bords du dispositif d'obturation 1.

Dans la position de libération, l'élément de guidage amovible 112 est alors libre d'être déplacé selon au moins une direction perpendiculaire au rail de guidage supérieur 111a, c'est-à-dire que l'élément de guidage amovible 112 peut être déplacé selon l'axe Y de façon à être retiré/séparé du rail de guidage 111a.

Comme illustré sur la figure 6, la portion de réception 111c présente une rainure de guidage 113 s'étendant selon un axe parallèle au rail de guidage supérieur111a (c'est-à-dire selon l'axe X). Cette rainure de guidage 113 est destiné à guider le déplacement de l'élément de guidage amovible 112 le long du rail 111a lors de son déplacement selon l'axe X, c'est-à-dire lors du passage de la position de solidarisation à la position de libération, et réciproquement.

Lorsque l'élément de guidage amovible 112 est retiré/séparé du rail de guidage 111a, il est alors aisé de retirer, par un mouvement de translation selon l'axe Y, la navette 123a, 123b hors du rail de guidage. Ainsi, le sous-ensemble mobile 12 peut être désolidarisé du sous-ensemble fixe 11 pour faciliter les opérations maintenance sur le dispositif d'obturation1.

### Autres aspects et variantes

Dans le mode de réalisation décrit ci-dessus, l'élément de guidage amovible 112 est mis en œuvre sur le rail de guidage supérieur 111a. On comprend bien évidemment que l'élément de guidage amovible 112 pourrait être mis en œuvre sur le rail de guidage inférieur 111b. Il pourrait également être mis en œuvre sur les rails de guidage de supérieur 111a et inférieur 111b afin de faciliter davantage la séparation/le démontage des sous-ensembles fixe et mobile l'un par rapport à l'autre.

Dans le mode de réalisation décrit ci-dessus, les moyens de fixation de l'élément de guidage amovible sur le rail de guidage se présentent sous la forme de crochets et de logements correspondant. On comprend bien évidemment que d'autres moyens de fixation peuvent être envisagés sans pour autant s'écarter du principe général de l'invention qui vise à équiper au moins un rail de guidage d'un élément amovible de sorte à permettre un retrait de la navette par rapport au rail de guidage.

Selon un aspect particulier, des moyens de maintien (non illustrés) sont mis en œuvre pour maintenir en position de solidarisation l'élément de guidage amovible. Ces moyens de maintien se présentent par exemple sous la forme de clips ou vis de maintien.

Dans une variante non illustrée, on peut envisager de ne pas séparer complètement l'élément amovible de guidage par rapport au rail de guidage. Par exemple, l'élément de guidage amovible pourrait pivoter par rapport au rail de guidage, formant ainsi un capot pivotant.

L'élément de guidage amovible 112 est par exemple fabriqué dans un matériau plastique afin de limiter son coût de fabrication. De préférence, l'élément de guidage amovible 112 est fabriqué dans le même matériau que le rail de guidage 111a, 111b de sorte à assurer déplacement au moins aussi efficace dans l'élément de guidage amovible que dans le rail de guidage. L'élément de guidage amovible 112 doit également présenter une esthétique équivalente au rail de guidage 111a, 111b sur lequel il est monté.

Dans une autre variante non illustrée, l'élément de guidage amovible porte, à l'opposé du rail de guidage, une portion d'extrémité destinée à être en accostage (c'est-à-dire en contact/en butée) avec un élément de garniture du véhicule. Une telle portion d'accostage, formée par une excroissance ou une continuité du rail (continuité de la nervure d'appuis Z), sert en outre de mur contre le passage de la lumière.

Le mode de réalisation décrit ci-dessus s'applique à une paroi latérale d'un véhicule automobile. L'invention peut s'appliquer de la même façon à d'autres structures présentant une paroi dans laquelle est définie une baie, comme, par exemple, une caravane ou un camping-car.

Notamment, la baie peut être formée dans une paroi latérale du véhicule (par exemple pour les véhicules utilitaires, les monospaces, les breaks...), dans une paroi orientée vers l'arrière du véhicule (par exemple pour les « pick-up »), ou encore dans une portière.

Il peut également s'agir d'une baie de séparation d'un véhicule.

## Revendications

1. Dispositif d'obturation (1) d'une baie ménagée dans une structure, comprenant une partie fixe (110), dans laquelle est définie une ouverture, et au moins un panneau mobile (120) coulissant guidé le long de deux rails (111a, 111b) de guidage montés sur une face dudit panneau fixe (110), entre une position de fermeture, obturant ladite ouverture, dans un premier plan défini par ledit panneau fixe (110), dit plan d'obturation, et au moins une position d'ouverture, dans un second plan, dit plan de coulissement, sensiblement parallèle audit plan d'obturation,
chacun desdits rails (111a, 111b) de guidage portant au moins une navette (123a, 123b) guidée en translation dans ledit rail (111a, 111b), mobile en translation dans lesdits rails de guidage (111a, 111b), et assurant le passage du panneau mobile (120) de ladite position d'obturation à ladite au moins une position de coulissement, et réciproquement, et le déplacement en coulissement dudit panneau mobile (120) dans ledit plan d'obturation,
**caractérisé en ce qu'** au moins un desdits rails (111a, 111b) de guidage porte un élément de guidage amovible (112) de longueur (L) au moins égale à la longueur (L') de ladite navette (123a, 123b), permettant, lorsqu'il est retiré, de dégager ladite navette (123a, 123b) dudit rail (111a, 111b) de guidage,
et **en ce que** ledit élément de guidage amovible (112) est mobile dans une direction parallèle audit rail (111a, 111b) de guidage, entre une position de solidarisation au rail et une position de libération, et
dans ladite position de libération, ledit élément de guidage amovible (112) est mobile dans au moins une direction perpendiculaire audit rail (111a, 111b) de guidage, de façon à être séparé de celui-ci.

2. Dispositif d'obturation (1) selon la revendication 1, **caractérisé en ce que** ledit rail (111a, 111b) de guidage, respectivement ledit élément de guidage amovible (112), porte au moins un crochet (114) apte à se solidariser à un logement correspondant formé dans ledit élément de guidage amovible (112), respectivement ledit rail (111a, 111b), dans ladite position de solidarisation.

3. Dispositif d'obturation (1) selon la revendication 2, **caractérisé en ce qu'**il comprend au moins deux crochets similaires (114), distribués selon un axe parallèle à l'axe dudit rail (111a, 111b) de guidage.

4. Dispositif d'obturation (1) selon l'une quelconque des revendications précédentes, **caractérisé en ce que** ledit rail (111a, 111b) de guidage présente une rainure (113) de guidage dudit élément de guidage amovible (112) le long dudit rail.

5. Dispositif d'obturation (1) selon l'une quelconque des revendications précédentes, **caractérisé en ce que** ledit élément de guidage amovible (112) présente une seconde portion de maintien et/ou de guidage de ladite navette, prolongeant une première portion de maintien et/ou de guidage formée dans ledit rail (111a, 111b) de guidage.

6. Dispositif d'obturation (1) selon l'une quelconque des revendications 1 à 4, **caractérisé en ce que** ledit élément de guidage amovible (112) porte une portion d'extrémité destinée à être en accostage avec un élément de garniture d'un véhicule.

7. Véhicule automobile comprenant au moins un dispositif d'obturation (1) selon l'une des revendications 1 à 6.

## Patentansprüche

1. Vorrichtung zum Verschließen (1) eines Öffnungsfeldes, das in einer Struktur ausgenommen ist, umfassend einen festen Abschnitt (110), in dem eine Öffnung definiert ist, und mindestens eine bewegliche Platte (120), die entlang zweier Führungsschienen (111a, 111b), die auf einer Seite der festen Platte (110) montiert sind, zwischen einer Verschlussposition, die die Öffnung verschließt, in einer ersten durch die feste Platte (110) definierten Ebene, Verschlussebene genannt, und mindestens einer Öffnungsposition in einer zweiten Ebene, Gleitebene genannt, im Wesentlichen parallel zur Verschlussebene geführt wird,
wobei jede der Führungsschienen (111a, 111b) mindestens einen Schlitten (123a, 123b) trägt, der in Translation in der Schiene (111a, 111b) in Translation in den Führungsschienen (111a, 111b) geführt wird und den Übergang der beweglichen Platte (120) von der Verschlussposition in die mindestens eine Gleitposition und umgekehrt und die Gleitverlagerung der beweglichen Platte (120) in die Verschlussebene gewährleistet,
**dadurch gekennzeichnet, dass** mindestens eine der Führungsschienen (111a, 111b) ein abnehmbares Führungselement (112) mit einer Länge (L) gleich der Länge (L') des Schlittens (123a, 123b) trägt, dass es, wenn es zurückgeschoben ist, ermöglicht, den Schlitten (123a, 123b) aus der Führungsschiene (111a, 111b) freizugeben,
wobei das abnehmbare Führungselement (112) in eine Richtung parallel zur Führungsschiene (111a, 111b) zwischen einer Verbindungsposition mit der Schiene und einer Freigabeposition beweglich ist, und
in der Freigabeposition das abnehmbare Führungselement (112) in mindestens eine Richtung senkrecht zur Führungsschiene (111a, 111b) beweglich ist, um von dieser getrennt zu werden.

2. Verschlussvorrichtung (1) nach Anspruch 1, **dadurch gekennzeichnet, dass** die Führungsschiene (111a, 111b) bzw. das abnehmbare Führungselement (112) mindestens einen Haken (114) trägt, der geeignet ist, sich mit einer entsprechenden Aufnahme, die in dem abnehmbaren Führungselement (112) bzw. der Schiene (111a, 111b) ausgebildet ist, in der Verbindungsposition zu verbinden.

3. Verschlussvorrichtung (1) nach Anspruch 2, **dadurch gekennzeichnet, dass** sie mindestens zwei ähnliche Haken (114) umfasst, die entlang einer Achse parallel zur Achse der Führungsachse (111a, 111b) verteilt sind.

4. Verschlussvorrichtung (1) nach einem der vorhergehenden Ansprüche, **dadurch gekennzeichnet, dass** die Führungsschiene (111a, 111b) eine Führungsrille (113) für das abnehmbare Führungselement (112) entlang der Schiene aufweist.

5. Verschlussvorrichtung (1) nach einem der vorhergehenden Ansprüche, **dadurch gekennzeichnet, dass** das abnehmbare Führungselement (112) einen zweiten Halte- und/oder Führungsabschnitt für den Schlitten aufweist, der einen ersten Halte- und/oder Führungsabschnitt, der in der Führungsschiene (111a, 111b) ausgebildet ist, verlängert.

6. Verschlussvorrichtung (1) nach einem der Ansprüche 1 bis 4, **dadurch gekennzeichnet, dass** das abnehmbare Führungselement (112) einen Endabschnitt trägt, der dazu bestimmt ist, an ein Dichtungselement eines Fahrzeugs anzuschließen.

7. Kraftfahrzeug, umfassend mindestens eine Verschlussvorrichtung (1) nach einem der Ansprüche 1 bis 6.

## Claims

1. A closing device (1) for closing an aperture formed in a structure, including a fixed part (110) in which an opening is defined, and at least one sliding movable panel (120) that is guided along two guide rails (111a, 111b) mounted on a face of said fixed panel (110), between a closed position, which closes said opening, in a first plane defined by said fixed panel (110), called the closing plane, and at least one open position, in a second plane, called the sliding plane, substantially parallel to said closing plane,
wherein each of said guide rails (111a, 111b) has at least one shuttle (123a, 123b), which is guided in translation in said rail (111a, 111b), movable in translation in said guide rails (111a, 111b), and which ensures the passage of the movable panel (120) from said closing position to said at least one sliding position, and vice versa, and the sliding movement of said movable panel (120) in said closing plane,
**characterized in that** at least one of said guide rails (111a, 111b) has a detachable guide element (112) of a length (L) at least equal to the length (L') of said shuttle (123a, 123b), which allows, when removed, said shuttle (123a, 123b) to be extracted from said guide rail (111a, 111b),
and **in that** said detachable guide element (112) is movable in a direction parallel to said guide rail (111a, 111b), between a coupling position for coupling with the rail and a release position, and
in said release position, said detachable guide element (112) is movable in at least one direction perpendicular to said guide rail (111a, 111b), so as to be separated from the same.

2. A closing device (1) according to claim 1, **characterized in that** said guide rail (111a, 111b), or said detachable guide element (112), has at least one hook (114) capable of coupling with a corresponding recess formed in said detachable guide element (112), or in said rail (111a, 111b), in said coupling position.

3. A closing device (1) according to claim 2, **characterized in that** it includes at least two similar hooks (114), distributed along an axis parallel to the axis of said guide rail (111a, 111b).

4. A closing device (1) according to any one of the preceding claims, **characterized in that** said guide rail (111a, 111b) has a guiding groove (113) for guiding said detachable guide element (112) along said rail.

5. A closing device (1) according to any one of the preceding claims, **characterized in that** said detachable guide element (112) has a second supporting and/or guiding portion for supporting and/or guiding said shuttle, which extends a first supporting and/or guiding portion formed in said guide rail (111a, 111b).

6. A closing device (1) according to any one of claims 1 to 4, **characterized in that** said detachable guide element (112) has an end portion intended to fit against a trim element of a vehicle.

7. A motor vehicle including at least one closing device (1) according to one of claims 1 to 6.
